(19) Europäisches Patentamt
European Patent Office
Office européen des brevets

(11) **EP 2 276 945 B1**

## (12) EUROPÄISCHE PATENTSCHRIFT

(45) Veröffentlichungstag und Bekanntmachung des Hinweises auf die Patenterteilung:
**11.07.2012 Patentblatt 2012/28**

(21) Anmeldenummer: **09741876.8**

(22) Anmeldetag: **06.05.2009**

(51) Int Cl.:
***F16D 65/00*** *(2006.01)*

(86) Internationale Anmeldenummer:
**PCT/EP2009/003232**

(87) Internationale Veröffentlichungsnummer:
**WO 2009/135657 (12.11.2009 Gazette 2009/46)**

(54) **BREMSSCHEIBENABDECKUNG FÜR EINE BREMSSCHEIBE EINER SCHEIBENBREMSE**

BRAKE DISK COVER FOR A BRAKE DISK OF A DISK BRAKE

TÔLE DE PROTECTION DE DISQUE POUR UN DISQUE DE FREIN D UN FREIN À DISQUES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **09.05.2008 DE 102008022967**

(43) Veröffentlichungstag der Anmeldung:
**26.01.2011 Patentblatt 2011/04**

(60) Teilanmeldung:
**11009482.8 / 2 426 369**

(73) Patentinhaber: **KNORR-BREMSE Systeme für Nutzfahrzeuge GmbH 80809 München (DE)**

(72) Erfinder:
• **PAHLE, Wolfgang 83707 Bad Wiessee (DE)**
• **SCHUBERT, Michael 80335 München (DE)**
• **LATHWESEN, Holger 85395 Heigenhausen (DE)**
• **PREITSAMETER, Josef 80798 München (DE)**

(74) Vertreter: **Mattusch, Gundula C/o Knorr-Bremse AG Moosacherstrasse 80 80809 München (DE)**

(56) Entgegenhaltungen:
EP-A- 0 786 606    DE-A1- 10 348 001
JP-A- 6 227 471    MX-A- PA05 012 473
US-A- 4 257 498    US-A1- 2008 053 762

**Beschreibung**

Die Erfindung betrifft eine Bremsscheibenabdeckung für eine Bremsscheibe einer Scheibenbremse nach dem Oberbegriff des Anspruchs 1, wie Z.B. aus EP-A-786 606 bekannt.

Derartige Bremsscheibenabdeckungen sind aus dem Stand der Technik an sich bekannt. Es wird insofern auf die DE 101 55 645 A1, die DE 103 48 001 A1 und die EP 1 191 245 A2 verwiesen. Sie weisen aber eine Reihe von Mängeln auf, die es zu beheben gilt. Weiteren Stand der Technik zeigen die EP 1 577 578 B1 und die SE 523 603 C2 sowie die MX PA05012473 A. Die in der letztgenannten Schrift dargestellte Bremsscheibenabdeckung weist zu beiden Axialseiten der Bremsscheibe hin schützende Abdeckungsbereiche auf.

So ist an den bekannten Bremsscheibenabdeckungen in der Regel das Schwingungsverhalten zu verbessern.

Die Lösung dieses Problems ist die Aufgabe der Erfindung.

Für die Lösung dieses Problems schlägt die Erfindung eine Lösungen vor, die ein besonders vorteilhaftes Schwingungsverhalten aufweist, wobei die Neigung zu starken Resonanzschwingungen im Fahrbetrieb besonders gering ist, insbesondere, da die ersten Eigenfrequenzen durch die gewählte Ausgestaltung in einem relativ hohen Frequenzbereich liegen.

So wird nach dem Kennzeichen des Anspruchs 1 vorgeschlagen, zwei Seitenwandbereiche auf einander direkt gegenüberliegenden Axialseitenabschnitten der abzudeckenden Bremsscheibe vorzusehen, welche zumindest einen Teilbereich der Axialseiten der Bremsscheibe abdecken und einen diese seitlichen Wandbereiche verbindenden Grundwandbereich, der den Umfangsrand der Bremsscheibe abdeckt, wobei die Seitenwandbereiche derart winklig zueinander ausgerichtet sind, dass der Abstand zwischen diesen beiden Seitenwandbereichen radial von inneren Umfangsrand der Seitenwandbereich zum äußeren Umfangsrand der Bremsscheibenabdeckung hin abnimmt.

Diese Ausgestaltung wirkt auf einfache Weise nachteiligen Resonanzeffekten entgegen.

Dabei ist es ferner zweckmäßig, wenn der äußere und/oder der innere Radius der Bremsscheibenabdeckung in den Bereichen, in welchen sie am achsfesten Bauteil befestigt ist maximal ist und ausgehend von diesem maximalen Wert mit zunehmendem Abstand von diesen Bereichen zu einem Minimum hin abnimmt.

Weitere vorteilhafte Ausgestaltungen sind den übrigen Unteransprüchen zu entnehmen.

Nachfolgend wird die Erfindung anhand eines Ausführungsbeispiels unter Bezug auf die Zeichnung näher beschrieben. Es zeigt:

Fig. 1    eine Seitenansicht einer an einem Bremsträger angeordneten Bremsscheibenabdeckung;

Fig. 2    einen Schnitt durch einen Teilbereich der Bremsscheibenabdeckung aus Fig. 1;

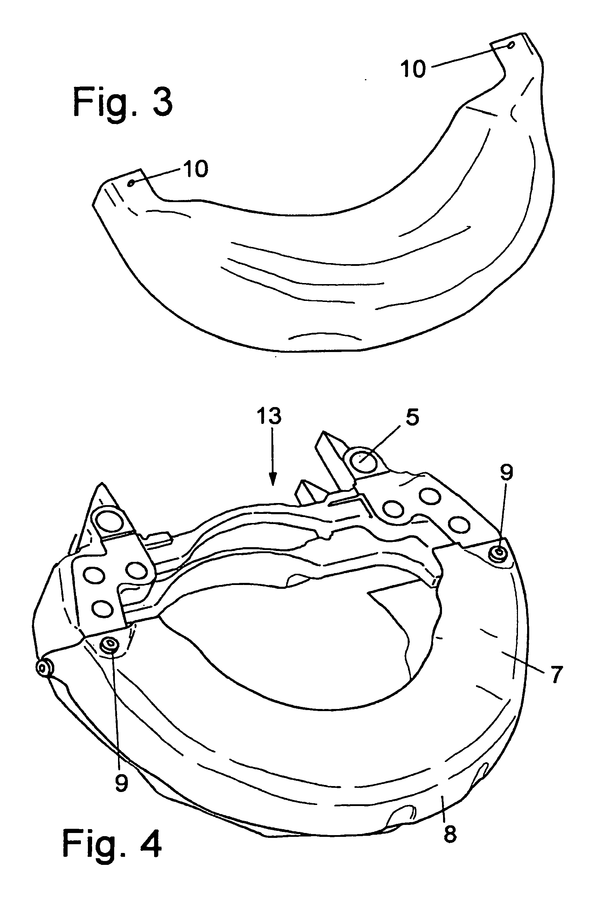

Fig. 3    eine perspektivische Ansicht der Bremsscheibenabdeckung aus Figur 1;

Fig. 4    eine perspektivische Ansicht der Anordnung aus Fig.1;

Fig. 5    einen weiteren Schnitt durch einen Teilbereich der Bremsscheibenabdeckung aus Fig. 1; und

Fig. 6    eine zu Fig. 1 um 90° gedrehte Ansicht der Anordnung aus Fig. 1.

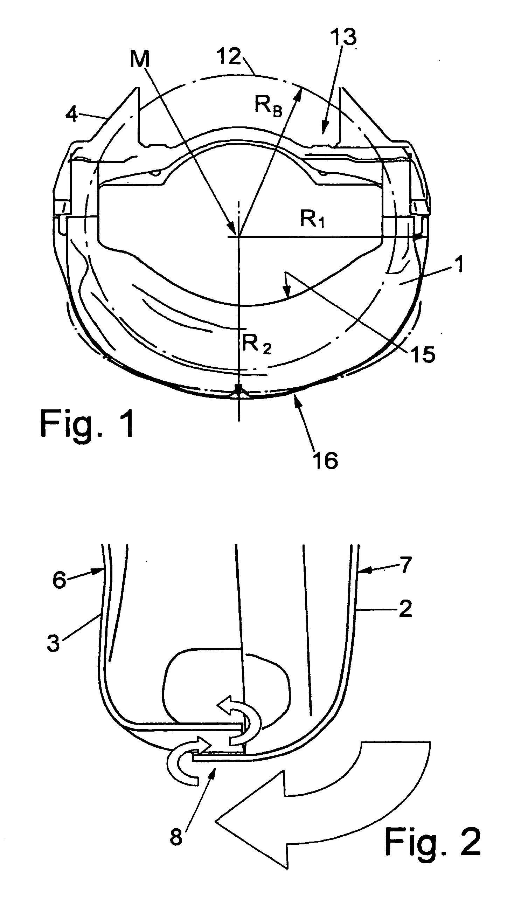

Fig. 1 zeigt eine Bremsscheibenabdeckung 1 für eine in dieser Figur nur durch ihre Mittelachse M und einen gestrichelten Kreis mit dem Radius RB und das Bezugszeichen 12 angedeutete Bremsscheibe einer Scheibenbremse eines Fahrzeugs, von der hier nur ein Bremsträger 4 dargestellt ist. An dem Bremsträger 4 wird ein Bremssattel der Scheibenbremse angeordnet (hier nicht dargestellt).

Die Bremsscheibenabdeckung 1 ist vorzugsweise zweistückig aus zwei Abdeckungsteilen 2, 3 zusammengesetzt, die insbesondere abschnittsweise miteinander verbunden, vorzugsweise verschweißt sind.

Der Bremssattel wird an dem einen sich während der Fahrt sich nicht mit der Radachse drehenden Bauteil wie hier beispielhaft dem Bremsträger 4 angeordnet, wohingegen die Bremsscheibe drehfest mit der sich drehenden Radachse gekoppelt ist. Das achsfeste Bauteil dient auch zum Befestigen der Bremsscheibenabdeckung 1.

Der Bremsträger 4 weist Befestigungsmittel zum Befestigen der Scheibenbremse auf, die hier Bohrungen 5 für sich parallel zur Bremsscheibenachse A erstreckende Sattellagerholme umfassen, auf denen der Bremssattel verschiebbar angeordnet ist.

Die Bremsscheibenabdeckung 1 der Erfindung ist insofern für Scheibenbremsen verschiedenster Konstruktion wie Festsattelbremsen, Schiebesattelbremsen oder Schwenksattelbremsen geeignet. Wenn nachfolgend die Befestigung am Bremsträger 4 beschrieben wird, ist diese lediglich als besonders bevorzugte Ausführung zu verstehen und auf eine Befestigung an einem achsfesten Bauteil zu verallgemeinern.

Die Bremsscheibe 12 ist vorzugsweise in axialer Richtung an der Fahrzeugachse festgelegt. Sie kann aber auch bei einer entsprechenden Dimensionierung der Bremsscheibenabdeckung als verschiebliche Bremsscheibe ausgelegt sein.

Um die Bremsscheibe 12 im Betrieb vor einem Verschmutzen und ggf. vor einer Beschädigung zu schützen, ist an dem Bremsträger die Bremsscheibenabdeckung 1 befestigt, die trogartig den Umfangsrand der Bremsscheibe abschnittsweise einfasst, und zwar insbesondere in einem Umfangsbereich, der nicht von dem Bremssattel eingerahmt ist.

Die Bremsscheibenabdeckung 1 weist zwei Seitenwandbereiche 6, 7 auf, welche einen Teilbereich der Axialseiten der Bremsscheibe abdecken und einen diese seitlichen Wandbereiche verbindenden Grundwandbereich 8, der den Umfangsrand der Bremsscheibe abdeckt.

In der Seitenansicht der Fig. 1 weisen die Seitenwandbereiche 6, 7 eine Bogenform auf und haben einen inneren, näher zum Mittelpunkt M der Bremsscheibe 12 liegenden Umfangsrand und einen äußeren Umfangsrand, der sich über den äußeren Umfangsrand der Bremsscheibe hinaus erstreckt. Die Seitenwandbereiche haben zumindest eine derartige Erstreckung, dass sie Reibringbereiche der Bremsscheibe ganz oder zum überwiegenden Teil abdecken.

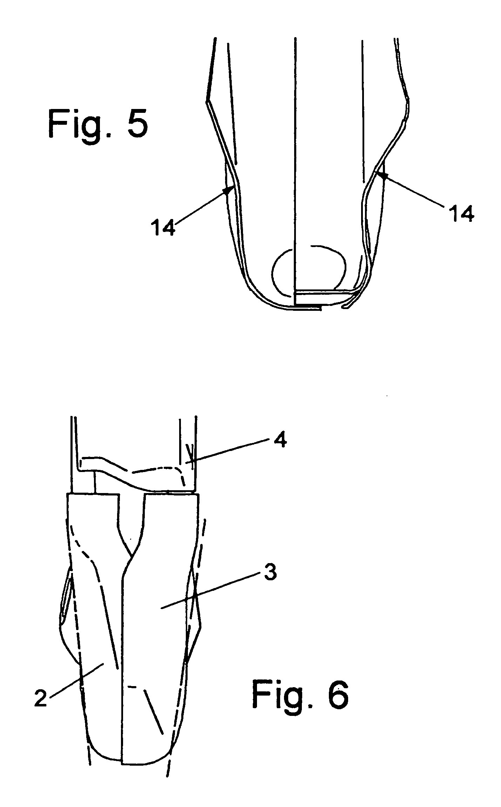

Die Seitenwandbereiche 6, 7 sind nach der bevorzugten erfinderischen Ausgestaltung der Fig. 5 nicht parallel zueinander ausgerichtet sondern vorzugsweise leicht derart winklig, dass der Abstand zwischen diesen beiden Seitenwandbereichen 6, 7 radial von innen nach außen abnimmt. Durch eine nicht ebene Ausgestaltung kann der Abstand zwischen den beiden Seitenwandbereichen lokal auch zunehmen, insgesamt nimmt er vom inneren Umfang der Bremsscheibenabdeckung zum äußeren Umfang der Bremsscheibenabdeckung jedoch ab, insbesondere lassen sich zueinander winklige, die Bremsscheibenabdeckung jeweils außen einhüllende Geraden an die Seitenwandbereiche legen. Vorzugsweise ist diese sich verjüngende Ausgestaltung kontinuierlich über den gesamten Abschnitt, über den sie die Bremsscheibe abdeckt, gegeben.

Vorzugsweise erfolgt die Befestigung mit Hilfe von Schrauben 9, welche Öffnungen 10 in der Bremsscheibenabdeckung 1 durchsetzen und in korrespondierende Gewindebohrungen im Bremsträger 1 eingeschraubt sind.

Vorzugsweise erfolgt die Befestigung jeweils mittels zwei der Schrauben 9 in zwei - vorzugsweise seitlich eines Belagschachtes 13 - voneinander abgewandten Bereichen des Bremsträgers.

Dabei ist besonders bevorzugt jeweils eines der beiden Abdeckungsteile 2, 3 - bezogen jeweils auf die Bremsscheibenachse mit wenigstens einer oder mehr, insbesondere zwei axial ausgerichteten Schrauben 9b am Bremsträger befestigt.

Dies ermöglicht einerseits eine leichte Montage und andererseits eine leichte Demontage bei Wartungsarbeiten.

Darüber hinaus wird besonders vorteilhaft eine Art Käfig um die Bremsscheibe ausgebildet, der sich selbst abstützt und eine besonders hohe Eigenfrequenz aufweist, d.h. die Neigung zu nachteiligen Resonanzeffekten während der Fahrt wird verringert.

Die Abdeckbleche sind vorzugsweise im CAD-Modell rein durch Freiformflächen modelliert (z.B. mit Hilfe von Non-Uniform Rational B-Splines, siehe z.B. den gleichlautenden Eintrag in "Wikipedia" am 14.04.08), so dass ihre Oberfläche eine freiformflächenartige Geometrie aufweist.

Unter einer Modellierung durch Freiformflächen im Sinne dieser Erfindung ist zu verstehen, dass die Fläche nicht einer durchgehenden Symmetrie unterliegt, was ebenfalls zur Versteifung und zu einer Verringerung zur Schwingungsneigung im Fahrbetrieb mit beiträgt.

Wie in Fig. 2 erkennbar, ist damit insbesondere im Bereich der axialen Seitenwandbereiche 6, 7 der Abstand dieser Bereiche zur Bremsscheibe nicht konstant parallel und auch nicht konstant winklig. Die Bremsscheibenabdeckung 1 weist vielmehr eine Art geschwungene, in sich gekrümmte Formgebung auf, wobei die Seitenwandbereiche 6, 7 aber an jeder Stelle zur Bremsscheibenoberfläche genügend beabstandet sind. Derart ist ein besonders günstiges Schwingungsverhalten erreicht.

Es ist vorteilhaft, wenn sich in den Seitenwandbereichen 6, 7 jeweils eine Art bogenförmige Vertiefung 14, um den Mittelpunkt der Bremsscheibe gekrümmt verlaufend, in der Bremsscheibenabdeckung ausgebildet wird (Bezierfunktion).

Die vorzugsweise zwei Teile 2, 3 der Bremsscheibenabdeckung 1 werden wiederum vorzugsweise aus einer Blechplatine gestanzt und sodann umformend in die Kontur der Bremsscheibenabdeckungsteile gebogen.

Alternativ ist auch eine Herstellung aus einem anderen Werkstoff, insbesondere aus einem Verbundwerkstoff denkbar.

Es ist ferner sowohl eine einstückige Ausgestaltung denkbar als auch die dargestellte zweistückige Ausgestaltung möglich.

Eine weitere herausragende Besonderheit der dargestellten Bremsscheibenabdeckung besteht in der gewählten Umfangskontur.

Die Umfangskontur ist vorzugsweise innen (bei 15) sowie außen (bei 16) jedenfalls über einen Teil der Umfangserstreckung hinweg abgeflacht ausgebildet.

Die maximale Erstreckung der Bremsscheibenabdeckung 1 ist hier im Bereich der Verschraubungen mit dem Bremsträger 4 gegeben. In diesem Bereich weist die Bremsscheibenabdeckung jeweils einen Radius R1 auf.

Ausgehend von diesen beiden Bereichen nimmt der Radius des Außenumfangs mit zunehmendem Abstand von den Verschraubungsbereichen jeweils ab. In dem in Fig. 1 untersten, mittig zwischen den Verschraubungen liegenden Außenumfangsbereich ist der Radius R2 am geringsten, d.h., es gilt:

$$R2 < R1.$$

Der Radius nimmt vorzugsweise nicht konstant ab.

Vorzugsweise ist die Umfangskontur derart abgeflacht ausgebildet, wobei sie aber an jeder Stelle einen größeren Umfangsradius aufweisen muss als die Bremsscheibe mit dem Radius RB und dem Mittelpunkt M. Derart wird in einfacher Weise die Masse optimiert verteilt, indem sie bereichsweise näher zum Mittelpunkt gelegt wird als bei einer Anordnung, bei welcher der Außenumfang durchgehend auf dem Kreis mit dem Radius R1 liegt.

**Bezugszeichen**

| Bremsscheibenabdeckung | 1 |
| Abdeckungsteile | 2, 3 |
| Bremsträger | 4 |
| Bohrungen | 5 |
| Seitenwandbereiche | 6, 7 |
| Grundwandbereich | 8 |
| Schrauben | 9 |
| Öffnungen | 10 |
| Bremsscheibe | 12 |
| Belagschacht | 13 |
| Vertiefung | 14 |
| Umfangskontur | 15, 16 |

**Patentansprüche**

1.   Bremsscheibenabdeckung (1) für eine Bremsscheibe (12) einer Scheibenbremse, welche an einem während einer Fahrt drehfesten Bauteil eines Fahrzeugs angeordnet ist und welche vorzugsweise trogartig den Umfangsrand der Bremsscheibe mit einem Radius (RB) jedenfalls abschnittsweise einfasst, wobei

   a. zwei Seitenwandbereiche (6, 7) auf einander direkt gegenüberliegenden Axialseitenabschnitten der abzudeckenden Bremsscheibe (12), welche zumindest einen Teilbereich der Axialseiten der Bremsscheibe (12) abdecken und
   b. einen diese seitlichen Wandbereiche verbindenden Grundwandbereich (8), der den Umfangsrand der Bremsscheibe (12) abdeckt,
   c. wobei die Seitenwandbereiche (6, 7) derart winklig zueinander ausgerichtet sind, dass der Abstand zwischen diesen beiden Seitenwandbereichen (6, 7) radial von inneren Umfangsrand der Seitenwandbereich zum äußeren Umfangsrand der Bremsscheibenabdeckung hin abnimmt,

**dadurch gekennzeichnet, dass** der äußere und/oder der innere Radius der Bremsscheibenabdeckung in den Bereichen, in welchen sie am achsfesten Bauteil befestigt ist, maximal ist und ausgehend von diesem Bereich mit zunehmendem Abstand in nicht konstanter Funktionalität zu einem Minimum hin abnimmt, und wobei in den Seitenwandbereichen (6, 7) jeweils eine Art bogenförmige Vertiefung (14), um den Mittelpunkt der Bremsscheibe (12) verlaufend, aus einer Bezierfunktion ausgebildet ist.

2. Bremsscheibenabdeckung (1) <u>nach Anspruch 1</u>, **dadurch gekennzeichnet, dass** der äußere und/oder der innere Radius der Bremsscheibenabdeckung in den Bereichen, in welchen sie am achsfesten Bauteil befestigt ist, maximal ist und ausgehend von diesem Bereich mit zunehmendem Abstand zu einem Minimum hin abnimmt.

3. Bremsscheibenabdeckung (1) nach einem der vorstehenden Ansprüche, **dadurch gekennzeichnet, dass** die Bremsscheibenabdeckung mit mehreren sich axial erstreckenden Befestigungsmitteln an dem achsfesten Bauteil, insbesondere dem Bremsträger, befestigt ist.

## Claims

1. Brake disc cover (1) for a brake disc (12) of a disc brake, which is disposed on a component of a vehicle that is rotationally fixed during a journey and which encloses the peripheral edge of the brake disc with a radius (RB) at least in sections, preferably in a trough-like fashion,
   wherein

   a. two side wall areas (6, 7) on axial side sections of the brake disc (12) to be covered that are directly opposite each other cover at least a partial area of the axial sides of the brake disc (12), and
   b. a base wall area (8), which connects these lateral wall areas, covers the peripheral edge of the brake disc (12),
   c. wherein the side wall areas (6, 7) are oriented at an angle to each other in such a way that the distance between these two side wall areas (6, 7) decreases radially from the inner peripheral edge of the side wall areas to the outer peripheral edge of the brake disc cover,

   **characterised in that** the outer and/or the inner radius of the brake disc cover is at its maximum in the areas in which it is fixed to the component fixed to the axle and, starting from this area, decreases in a non-constant functionality toward a minimum with increasing distance, and **in that** a kind of arcuate depression (14) bent around the centre of the brake disc (12) is formed in each of the side wall areas (6, 7) from a Bézier function.

2. Brake disc cover (1) according to claim 1, **characterised in that** the outer and/or the inner radius of the brake disc cover is at its maximum in the areas in which it is fixed to the component fixed to the axle and, starting from this area, decreases toward a minimum with increasing distance.

3. Brake disc cover (1) according to any of the preceding claims, **characterised in that** the brake disc cover is fixed to the component fixed to the axle, in particular the backing plate, by a plurality of axially extending fixing means.

## Revendications

1. Recouvrement (1) d'un disque (12) de frein d'un frein à disque, qui est disposé sur un élément d'un véhicule fixe en rotation pendant une marche et qui borde en tout cas par endroit, de préférence à la manière d'un godet, le bord périphérique du disque de frein ayant un rayon (RB), comprenant

   a) deux parties (6, 7) de paroi latérales sur des segments latéraux axiaux opposés directement l'un à l'autre du disque (12) de frein à recouvrir, qui recouvrent au moins une zone partielle des côtés axiaux du disque (12) de frein, et
   b) une partie (8) de paroi de base, reliant les parties de paroi latérales et recouvrant le bord périphérique du disque (12) de frein,
   c) dans lequel les parties (6, 7) de paroi latérales font entre elles un angle de manière à ce que la distance entre ces parties (6, 7) de paroi latérales diminue radialement du bord périphérique intérieur de la partie de paroi latérale au bord périphérique extérieur du recouvrement du disque de frein,

   **caractérisé en ce que** le rayon extérieur et/ou le rayon intérieur du recouvrement de disque de frein est maximum dans les zones dans lesquelles il est fixé à l'élément fixe par rapport à l'essieu et, à partir de cette zone, diminue au fur et à mesure que la distance croît suivant une fonctionnalité non constante jusqu'à un minimum et dans lequel, dans les parties (6, 7) de paroi latérales, est formée, à partir d'une fonction de Bézier, respectivement une sorte de cavité (14) en forme d'arc s'étendant autour du centre du disque (12) de frein.

2. Recouvrement (1) de disque de frein suivant la revendication 1, **caractérisé en ce que** le rayon extérieur et/ou le rayon intérieur du recouvrement de disque de frein est maximum dans les zones dans lesquelles il est fixé à l'élément fixe par rapport à l'essieu et diminue jusqu'à un minimum à partir de cette zone au fur et à mesure que la distance augmente.

3. Recouvrement (1) de disque de frein suivant l'une des revendications précédentes, **caractérisé en ce que** le recouvrement de disque de frein est fixé à l'élément fixe par rapport à l'essieu, notamment au support de frein, par plusieurs moyens de fixation s'étendant axialement.

Fig. 1

Fig. 2

Fig. 3

Fig. 4

Fig. 5

14

14

4

3

2

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 786606 A
- DE 10155645 A1
- DE 10348001 A1
- EP 1191245 A2
- EP 1577578 B1